# EUROPÄISCHE PATENTSCHRIFT

(11) **EP 1 915 533 B1**
(45) Veröffentlichungstag und Bekanntmachung des Hinweises auf die Patenterteilung: **15.06.2011**
(21) Anmeldenummer: 06805638.1
(22) Anmeldetag: 08.08.2006
(51) Int. Cl.: F04B 49/00, F04B 49/22

(54) **REGELVORRICHTUNG FÜR EINE HYDROSTATISCHE KOLBENMASCHINE MIT ELEKTRONISCHER STEUEREINHEIT**
REGULATOR DEVICE FOR A HYDROSTATIC PISTON MACHINE WITH ELECTRONIC CONTROL UNIT
DISPOSITIF DE REGULATION POUR MACHINE A PISTON HYDROSTATIQUE POURVU D'UNE UNITE DE COMMANDE ELECTRONIQUE

(30) Priorität: 09.08.2005 DE 102005037620
(43) Veröffentlichungstag der Anmeldung: 30.04.2008
(73) Patentinhaber: Bosch Rexroth AG, 97816 Lohr am Main (DE)
(72) Erfinder: GEISSLER, Grit, 01277 Dresden (DE); BARTELS, Olaf, 74321 Bietigheim (DE); GINTNER, Jürgen, 89275 Elchingen (DE); DAMBACHER, Andreas, 71706 Marktgröningen (DE)
(74) Vertreter: Körfer, Thomas
(86) Internationale Anmeldenummer: PCT/EP2006/007845
(87) Internationale Veröffentlichungsnummer: WO 2007/017251

(56) Entgegenhaltungen:
- EP-A2- 0 955 465
- DE-A1- 10 006 405
- US-B1- 6 394 206

## Beschreibung

Die Erfindung betrifft eine Regelvorrichtung für eine hydrostatische Kolbenmaschine.

Zum Betreiben von hydrostatischen Antrieben werden meist hydrostatische Kolbenmaschinen eingesetzt, die in ihrem Schluck- oder Fördervolumen verstellbar sind. Dabei wirkt auf einen Verstellmechanismus der hydrostatischen Kolbenmaschine eine Verstellvorrichtung, die durch eine Regelvorrichtung angesteuert wird.

Aus der DE 195 40 654 C1 ist hierzu ein Regelventil bekannt, bei dem ein Ventilkolben längs verschieblich in einem Ventilgehäuse angeordnet ist. Der Ventilkolben ist an seinen entgegengesetzt orientierten Stirnflächen jeweils mit einem Steuerdruck beaufschlagbar. Durch eine axiale Bewegung des Ventilkolbens in eine Richtung wird ein Eingangsdruckanschluss durch Verschiebung des dichtenden Bereichs mit einem ersten Ausgang verbunden. Gleichzeitig wird ein zweiter Ausgang mit einem Tankanschluss verbunden. Bei einer Bewegung in der entgegengesetzten Richtung wird der zweite Ausgangsanschluss mit dem Eingangsanschluss verbunden und gleichzeitig der erste Ausgangsanschluss mit dem Tankanschluss verbunden. Die daraus resultierende Stellbewegung des Stellkolbens wird über ein Rückführelement auf den Ventilkolben zurückgekoppelt, um eine der auf die Stirnfläche des Ventilkolbens wirkenden Kraft proportionale Verstellung des Verstellkolbens zu erreichen. Die Stellbewegung wird durch das Rückführelement übertragen und lenkt einen von zwei Schenkeln aus. Die beiden Schenkel sind über eine Feder miteinander verbunden, wobei sich der jeweils nicht ausgelenkte Schenkel an einem Mitnahmestift des Ventilkolbens abstützt. Die bekannte Verstellvorrichtung hat den Nachteil, dass die mechanische Rückkopplung einen erheblichen Aufwand darstellt.

Aus der EP 0955 465 A2, die die Merkmale des Oberbegriffs des Anspruchs 1 offenbart, ist eine Axialkolbenpumpe mit integriertem Schwenkwegmesssystem bekannt. Diese verstellbare hydrostatische Axialkolbenmaschine weist ein berührungsfrei arbeitendes Wegmesssystem auf. Das berührungsfrei arbeitende Wegmesssystem ist an der Schrägscheibe angeordnet und erfasst somit die Position der verstellbaren Axialkolbenmaschine.

Die Erfindung hat die Aufgabe, eine Regelvorrichtung für eine hydrostatische Kolbenmaschine zu schaffen, die eine einfache Erfassung der Stellkolbenposition ermöglicht.

Die Aufgabe wird durch die erfindungsgemäße Regelvorrichtung mit den Merkmalen des Anspruchs 1 gelöst.

Die erfindungsgemäße Regelvorrichtung für eine hydrostatische Kolbenmaschine umfasst eine elektronische Steuereinheit. Die elektronische Steuereinheit ist zum Erzeugen von Stellsignalen vorgesehen. Damit die elektronische Steuereinheit die jeweils aktuelle Lage des Schwenkwinkels der hydrostatischen Kolbenmaschine berücksichtigen kann, ist in der Regelvorrichtung ein Rückführelement vorgesehen. Das Rückführelement greift die Stellposition der hydrostatischen Kolbenmaschine ab. Die von dem Rückführelement abgegriffene Stellposition wird durch ein in der elektronischen Steuereinheit integriertes Sensorelement berührungslos erfasst.

Durch das Vorsehen eines Sensorelements, welches eine abgegriffene Stellposition berührungslos erfasst, entfällt die mechanische Rückkopplung. Damit kann das Sensorelement auf einer Platine der elektronischen Steuereinheit vorgesehen werden und eine Verkabelung ist nicht erforderlich. Gleichzeitig wird durch das Vorsehen eines Sensorelements zur berührungslosen Erfassung die Montagesicherheit und die Betriebssicherheit erhöht. Im Gegensatz zu einer mechanischen Rückkopplung der Stellposition auf ein Regelventil wird die Position berührungslos erfasst und unmittelbar in dem erzeugten Stellsignal berücksichtigt. Schließlich erlaubt das berührungslose Erfassen der abgegriffenen Stellposition die Abdichtung der elektronischen Komponenten von den Bereichen der hydrostatischen Kolbenmaschine, welche ölführend sind.

In den Unteransprüchen sind vorteilhafte Weiterbildungen der erfindungsgemäßen Regelvorrichtung ausgeführt. Insbesondere ist es vorteilhaft, die Regelvorrichtung mit einem ersten und einem zweiten Gehäuseteil auszubilden. Dabei kann die elektronische Steuereinheit in einem ersten Gehäuseteil und das Rückführelement in einem zweiten Gehäuseteil angeordnet sein. Durch die Aufteilung ist eine einfache Möglichkeit gegeben, die elektronischen Komponenten und die mechanischen/hydraulischen Komponenten voneinander zu trennen. Dabei lassen sich insbesondere in einfacher Weise die beiden Gehäuseteile gegeneinander abdichten.

Eine besonders einfache Übertragung und Erfassung der Stellposition einer Stellvorrichtung der hydrostatischen Kolbenmaschine lässt sich erreichen, wenn an dem Rückführelement ein Magnetelement vorgesehen ist und die elektronische Steuereinheit ein magnetisch sensitives Sensorelement aufweist. Sofern die beiden Gehäuseteile, in denen bevorzugt die elektronische Steuereinheit bzw die mechanisch/hydraulischen Komponenten angeordnet sind, aus einem Werkstoff bestehen, der beispielsweise eine optische Erfassung der Stellposition verhindert, so ist durch die Verwendung eines Magneten in Kombination mit einem magnetsensitiven Sensorelement in einfacher Weise die berührungslose Erfassung der Stellposition möglich.

Eine besonders günstige Anordnung ergibt sich, wenn das Rückführelement eine Welle aufweist, die in der Regelvorrichtung drehbar gelagert ist. Durch eine solche drehbar gelagerte Welle lässt sich auf kleinem Bauraum eine Messgröße für die abgegriffene Stellposition der hydrostatischen Kolbenmaschine aufgrund des Winkels der Welle des Rückführelements ermitteln.

Zur Übersetzung einer im Regelfall linearen Stellbewegung einer Stellvorrichtung der hydrostatischen Kolbenmaschine in eine Winkelinformation ist vorzugsweise ein Rückführhebel drehfest mit der Welle des Rückführelements verbunden. Dabei kann der Rückführhebel so aus einem Gehäuse der Regelvorrichtung herausgeführt sein, dass die gesamte Regelvorrichtung als modulares Bauteil auf eine existierende hydrostatische Kolbenmaschine herkömmlicher Bauart aufgesetzt wird. Die Rückführelemente konventionell mechanisch rückgekoppelter Maschinen können teilsweise weiterverwendet werden. Hierzu greift der Rückführhebel in eine entsprechende Ausnehmung der Stellvorrichtung der hydrostatischen Kolbenmaschine ein. Die lineare Bewegung wird durch den drehfest mit der Welle verbundenen Rückführhebel in eine Drehbewegung der Welle umgesetzt. Dabei ist besonders bevorzugt das Magnetelement an der Welle angeordnet. Bevorzugt wird das Magnetelement an der Stirnseite der Welle angeordnet, so dass bei einer Drehung der Welle ein gleichbleibender Abstand zwischen dem Magnetelement und dem Sensorelement auf der Leiterplatte der elektronischen Steuereinheit gewährleistet ist.

Die Winkelstellung des Magnetelements und damit die Stellposition der hydrostatischen Kolbenmaschine lässt sich in besonders einfacher Weise durch einen Hall-Sensor als Sensorelement oder durch einem magnetoresistiven Widerstand erfassen.

Weiterhin ist es vorteilhaft, unmittelbar in der elektronischen Steuereinheit die Temperatur der hydrostatischen Kolbenmaschine zu erfassen. Hierzu ist in der elektronischen Steuereinheit ein Temperatursensor angeordnet. Durch die nahe Anordnung der elektronischen Steuereinheit an der hydrostatischen Kolbenmaschine ist ein eindeutiger Zusammenhang zwischen der Betriebstemperatur der hydrostatischen Kolbenmaschine und der in der elektronischen Steuereinheit gemessenen Temperatur gegeben.

Um die Erfassung der Temperatur der hydrostatischen Kolbenmaschine weiter zu verbessern, sind das erste Gehäuseteil und das zweite Gehäuseteil vorzugsweise aus einem metallischen Werkstoff ausgebildet, so dass der Temperatursensor der elektronischen Steuereinheit eine nahezu mit der Betriebstemperatur der hydrostatischen Kolbenmaschine identische Temperatur misst.

Ein bevorzugtes Ausführungsbeispiel der erfindungsgemäßen Regelvorrichtung ist in der Zeichnung dargestellt und wird in der nachfolgenden Beschreibung näher erläutert. Es zeigen:
- Fig. 1: eine schematische Darstellung einer Regelung einer hydrostatischen Kolbenmaschine;
- Fig. 2: eine Seitenansicht einer hydrostatischen Kolbenmaschine mit einer daran angebauten erfindungsgemäßen Regelvorrichtung;
- Fig. 3: eine Schnittdarstellung durch eine erfindungsgemäße Regelvorrichtung;
- Fig. 4: eine perspektivische Darstellung eines anbaubaren Moduls mit der erfindungsgemäßen Regelvorrichtung; und
- Fig. 5: ein erstes Beispiel für ein alternatives Steuerdruckregelventil;
- Fig. 6: eine alternative Ausführungsform zu dem Steuerdruckregelventil mit zwei Wegenventilen;
- Fig. 7: eine weitere alternative Ausführungsform mit zwei Wegenventilen;
- Fig. 8: ein zweites alternatives Steuerdruckregelventil; und
- Fig. 9: eine alternative Ausführungsform zu dem Steuerdruckregelventil nach Fig. 8 mit zwei Druckreduzierventilen.

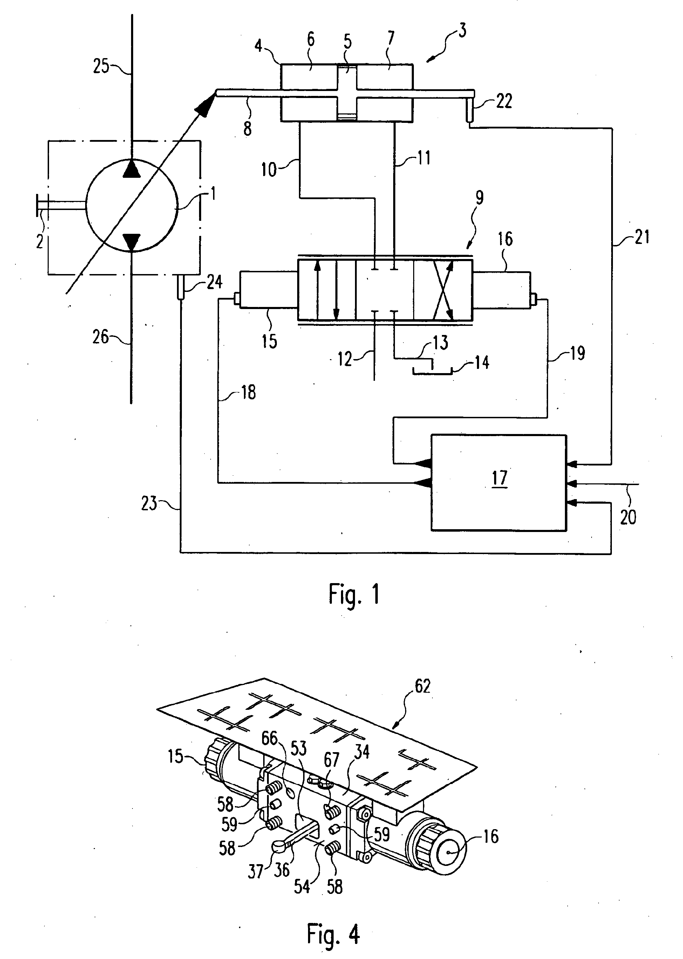

Bevor auf die erfindungsgemäße Ausgestaltung der Regelvorrichtung eingegangen wird, soll zunächst anhand des schematischen Schaltplans der Fig. 1 erläutert werden, welche Aufgaben durch die erfindungsgemäße Regelvorrichtung erfüllt werden müssen. In der Fig. 1 ist eine hydrostatische Kolbenmaschine 1 als verstellbare Pumpe ausgeführt. Die hydrostatische Kolbenmaschine 1 wird über eine Triebwelle 2 angetrieben. Als Antriebsmaschine dient beispielsweise ein Dieselmotor einer Arbeitsmaschine.

Auf den Verstellmechanismus der hydrostatischen Kolbenmaschine 1 wirkt eine Verstellvorrichtung 3. Die Verstellvorrichtung 3 weist einen Zylinder 4 auf, in dem längs verschieblich ein Stellkolben 5 angeordnet ist. Der Stellkolben 5 weist zwei entgegengesetzte Stelldruckflächen auf, mit denen der Zylinder 4 in eine erste Stelldruckkammer 6 und eine zweite Stelldruckkammer 7 geteilt wird. Zum Übertragen der Stellbewegung des Stellkolbens 5 ist eine Kolbenstange 8 vorgesehen, die mechanisch mit dem Stellmechanismus der hydrostatischen Kolbenmaschine 1 gekoppelt ist.

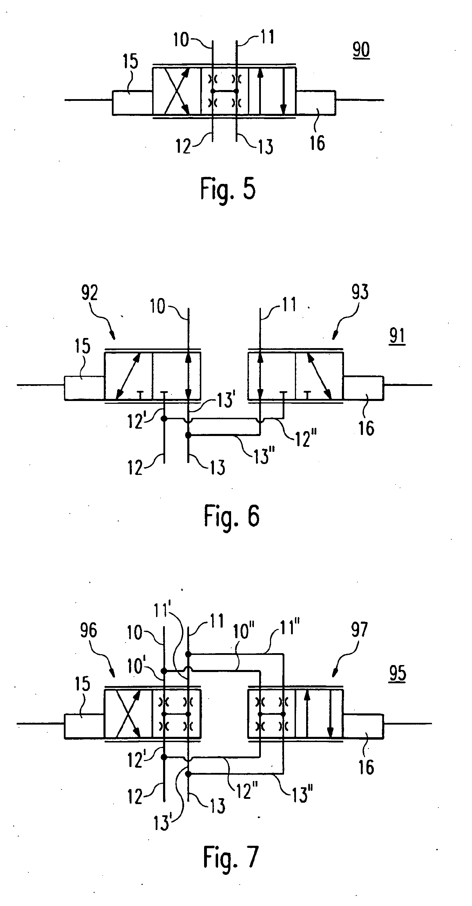

Die Stellbewegung des Stellkolbens 5 wird durch Einstellen entsprechender Stelldrücke in der ersten Stelldruckkammer 6 und der zweiten Stelldruckkammer 7 erzeugt. Zum Einstellen der Stelldrücke ist ein Stelldruckregelventil 9 vorgesehen, welches über eine erste Stelldruckleitung 10 und eine zweite Stelldruckleitung 11 die erste Stelldruckkammer 6 bzw. die zweite Stelldruckkammer 7 mit einem einstellbaren Druck beaufschlagt. Das Stelldruckregelventil 9 ist ein 4/3-Wegeventil, durch welches die erste Stelldruckleitung 10 bzw. die zweite Stelldruckleitung 11 wechselweise mit einer Druckzuführungsleitung 12 oder einer Entspannungsleitung 13 verbindbar ist. Über die Entspannungsleitung 13 wird aus einer der Stelldruckkammern 6, 7 abgeführtes Druckmittel in das Tankvolumen 14 entspannt. Das Stelldruckregelventil 9 ist kontinuierlich zwischen seinen beiden Endpositionen verstellbar. Die Position des Stelldruckregelventils 9 wird durch einen ersten Elektromagneten 15 und einen zweiten Elektromagneten 16 festgelegt. Das Stelldruckregelventil 9 ist vorzugsweise ein Proportionalventil. Verschiedene Ausführungsformen eines solchen Proportionalventils in Form von Proportionalwegeventilen oder Druckreduzierventilen werden unter Bezugnahme auf die Figuren 5 bis 9 noch erläutert.

Die Stellsignale für die Elektromagneten 15, 16 werden durch eine elektronische Steuereinheit 17 erzeugt und den Elektromagneten 15, 16 über Stellsignalleitungen 18 bzw. 19 übermittelt.

Um die Stellsignale für den ersten Elektromagneten 15 bzw. den zweiten Elektromagneten 16 bestimmen zu können, werden der elektronischen Steuereinheit 17 verschiedene Eingangsgrößen zugeführt. Neben der zentralen Eingangsgröße, die beispielsweise durch eine Fahrhebelvorgabe eines Bedieners über eine Leitung 20 zugeführt wird, sind dies z. B. Größen der hydraulischen Anlage selbst. Zusätzlich zu der nicht in der Fig. 1 eigens dargestellten Erfassung der in den Arbeitsleitungen 25, 26 herrschenden Drücke ist für eine Festlegung der Stellsignale für den ersten Elektromagneten 15 sowie den zweiten Elektromagneten 16 auch die Erfassung der tatsächlichen Stellposition des Stellkolbens 5 erforderlich.

Die tatsächliche Stellposition des Stellkolbens 5 korrespondiert mit dem eingestellten Schluck- bzw. Fördervolumen der hydrostatischen Kolbenmaschine 1. In der schematischen Darstellung der Fig. 1 ist hierzu ein Sensorelement 22 vorgesehen, welches über eine Messleitung 21 die erfasste Position der zentralen Recheneinheit der elektronischen Steuereinheit 17 übermittelt. Die Darstellung der Erfassung der Stellposition des Stellkolbens 5 außerhalb der elektronischen Steuereinheit 17 ist in der Fig. 1 lediglich zum besseren Verständnis gewählt. Tatsächlich ist bei der bevorzugten erfindungsgemäßen Regelvorrichtung die Positionserfassung in die Regelvorrichtung integriert. Weiterhin wird vorzugsweise die Ist-Temperatur der hydrostatischen Kolbenmaschine 1 durch einen Temperatursensor 24 ermittelt und über eine Messleitung 23 wiederum dem Rechner der elektronischen Steuereinheit 17 übermittelt. Auch die Ermittlung der Temperatur erfolgt bei der erfindungsgemäßen Regelvorrichtung vorzugsweise innerhalb der elektronischen Steuereinheit 17 und ist lediglich zu Illustrationszwecken durch ein Temperatursensorelement an der hydrostatischen Kolbenmaschine 1 dargestellt. Dementsprechend werden die Messleitungen 21 und 23 bei der erfindungsgemäßen Regelvorrichtung vorzugsweise durch Leiterbahnen auf einer Platine der elektronischen Steuereinheit 17 gebildet und die Sensoren sind auf der Leiterplatte angeordnet.

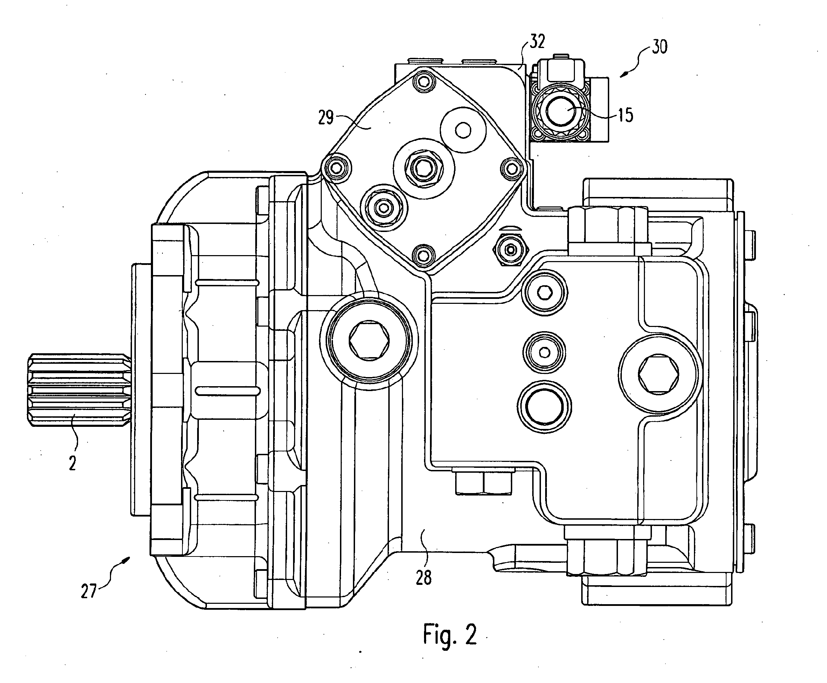

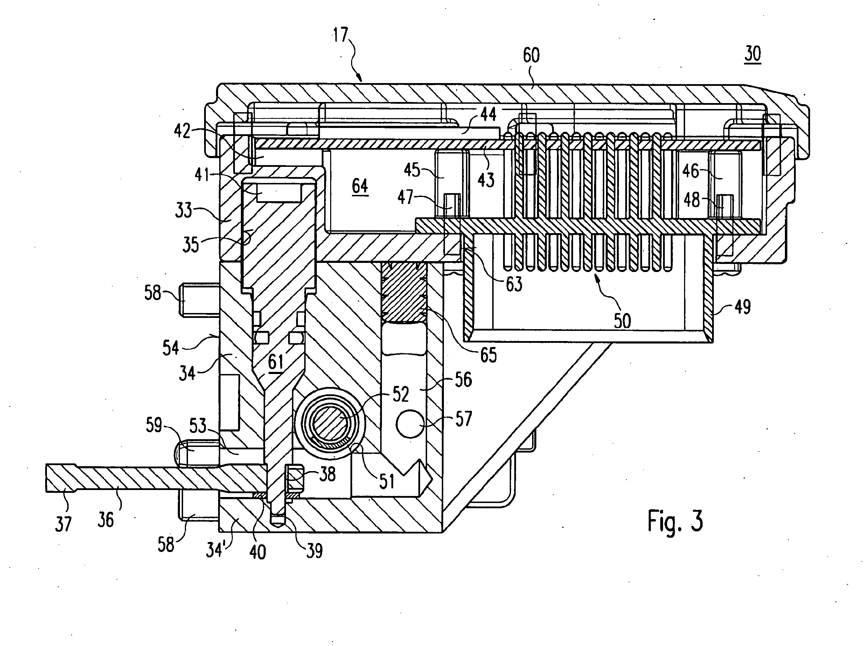

In der Fig. 2 ist die Anordnung der erfindungsgemäßen Regelvorrichtung an einer hydrostatischen Kolbenmaschine 27 dargestellt. Die Fig. 2 zeigt eine Seitenansicht einer hydrostatischen Kolbenmaschine 27 mit einem Gehäuse 28. Aus dem Gehäuse 28 ragt die Triebwelle 2 heraus. In einem Gehäuseabschnitt ist eine Verstellvorrichtung mit dem Stellkolben 5 ausgebildet, die durch einen Deckel 29 verschlossen ist. Bei der in der Fig. 2 dargestellten hydrostatischen Kolbenmaschine 27 führt der Stellkolben 5 eine lineare Stellbewegung aus, die senkrecht zu der Zeichenebene verläuft. Die Regelvorrichtung 30, die bei dem bevorzugten, in der Fig. 2 dargestellten Ausführungsbeispiel eine integrierte Baugruppe mit dem Steuerdruckregelventil 9 bildet, ist seitlich an einem Gehäuseteil 32 angeordnet. Die Regelvorrichtung 30, bei der in der Fig. 2 die Stirnseite des Elektromagneten 15 zu sehen ist, wird vorzugsweise mit dem Gehäuseteil 32 verschraubt. Der Stellkolben 5 weist eine Ausnehmung auf, in die ein aus dem Gehäuse der Regelvorrichtung 30 herausragender Rückführhebel eingreift. Dies wird nachfolgend unter Bezugnahme auf die Fig. 3 und 4 noch verdeutlicht.

Die Fig. 3 zeigt einen Schnitt durch die erfindungsgemäße Regelvorrichtung 30. Die erfindungsgemäße Regelvorrichtung 30 weist ein erstes Gehäuseteil 33 und ein zweites Gehäuseteil 34 auf. In dem ersten Gehäuseteil 33 und dem zweiten Gehäuseteil 34 ist eine gemeinsame, gestufte Ausnehmung 35 eingebracht, in welcher eine Welle 61 angeordnet ist. Das erste Gehäuseteil 33 dient dabei gleichzeitig als Deckel für das zweite Gehäuseteil 34. Ein Eindringen von Druckmittel in das erste Gehäuseteil 33 aus dem zweiten Gehäuseteil 34 ist damit ausgeschlossen und die Gehäuseteile 33, 34 sind gegeneinander abgedichtet. Die Welle 61 bildet zusammen mit einem Rückführhebel 36 ein Rückführelement aus. An seinem von der Welle 61 abgewandten Ende weist der Rückführhebel 36 einen verdickten, als Kopf 37 ausgebildeten Bereich auf, mit dem er in den Stellkolben 5 der Verstellvorrichtung 3 eingreift. Die Lage des Stellkolbens 5 ist dabei so gewählt, dass er sich senkrecht zu der Zeichenebene linear bewegt. Zum Abgreifen der Stellposition des Stellkolbens 5 wird durch die Stellbewegung des Stellkolbens 5 der Rückführhebel 36 um die Achse der Welle 61 gedreht.

Der Rückführhebel 36 weist ein Auge 38 auf, welches von der Welle 61 durchdrungen wird. Die Geometrie des Auges 38 und die Geometrie der Welle 61 an dieser Stelle sind so gewählt, dass eine Drehbewegung des Rückführhebels 36 eine Drehung der Welle 61 in der Ausnehmung 35 bedeutet. An ihrem rückführhebelseitigen Ende weist die Welle 61 einen zapfenförmigen Fortsatz auf, der in eine Sackbohrung 39 des zweiten Gehäuseteils 34 eingreift und somit eine verbesserte Lagerung der Welle 61 ermöglicht. Zwischen dem Rückführhebel 36 und einer Wand 34' des zweiten Gehäuseteils 34 ist eine Anlaufscheibe 40 angeordnet, um die Reibung zwischen dem Rückführhebel 36 und der Wand 34' möglichst gering zu halten.

An dem von der Verbindung zu dem Rückführhebel 36 abgewandten Ende der Welle 61 ist eine Magnetaufnahme 41 ausgebildet. Im dargestellten Ausführungsbeispiel ist die Magnetaufnahme 41 an der Stirnseite der Welle 61 durch eine eingefräste Nut realisiert. In diese Nut wird ein in der Zeichnung nicht dargestellter Magnet eingesetzt. Der Magnet ist vorzugsweise als Permanentmagnet ausgeführt.

Bei der in der Fig. 3 dargestellten neutralen Position, die beispielsweise einer Nullhubeinstellung der hydrostatischen Kolbenmaschine entspricht, verläuft z. B. die N-S-Achse eines eingesetzten Magneten senkrecht zu der Zeichenebene. Die Position des in die Magnetaufnahme 41 eingesetzten Magneten wird durch ein Sensorelement 42 erfasst. Das Sensorelement 42 ist auf einer Leiterplatte 43 der elektronischen Steuereinheit 17 angeordnet. Auf der Leiterplatte 43 ist zudem die zentrale Recheneinheit 44 der elektronischen Steuereinheit 17 zum Ermitteln der Stellsignale angeordnet. Die Leiterplatte 43 wird durch einen ersten Abstandshalter 45 und einem zweiten Abstandshalter 46, die über einen ersten Zapfen 47 bzw. einen zweiten Zapfen 48 in dem ersten Gehäusesteil 33 eingesetzt sind, gehalten. Gleichzeitig wird durch den ersten Abstandshalter 45 und dem zweiten Abstandshalter 46 ein Steckergehäuse 49 in einer Ausnehmung 63 des ersten Gehäuseteils 33 fixiert. Das Steckergehäuse 49 ist vorzugsweise als Kunststoffspritzteil ausgebildet, wobei die Anschlussstifte 50 durch das Kunststoffspritzteil umspritzt sind und somit das Innere der elektronischen Steuereinheit 17 z. B. gegen Feuchtigkeit der Umgebung abdichten. Die Ebene, in der die Leiterplatte 43 angeordnet ist, liegt vorzugsweise senkrecht zu der Drehachse der Welle 61. Dadurch lässt sich die ohnehin wegen des Ventils erforderliche Bauhöhe nutzen, um einen Anschlussstecker auf der der Kolbenmaschine zugewandten Seite der elektronischen Steuereinheit 17 anzubringen.

In dem ersten Gehäuseteil 33 ist ein Aufnahmeraum 64 zur Aufnahme der elektronischen Steuereinheit 17 ausgebildet. Dieser Aufnahmeraum 64 wird durch einen Deckel 60 verschlossen, durch den gleichzeitig die Leiterplatte 43 niedergehalten und somit auf dem ersten Abstandshalter 45 und dem zweiten Abstandshalter 46 fixiert wird. Der Teil der Ausnehmung 35, der in dem ersten Gehäuseteil 33 ausgebildet ist, ist von außen in das erste Gehäuseteil 33 eingebracht und weist keine Verbindung zu dem Aufnahmeraum 64 auf. Die Abtastung der relativen Lage des in die Magnetaufnahme 41 eingesetzten Magneten durch das Sensorelement 42 erfolgt durch die Gehäusewand hindurch berührungslos. Hierzu dringen die Feldlinien des Permanentmagneten durch die Wandung des ersten Gehäuseteils 33 im Bereich zwischen der Magnetaufnahme 41 und dem Sensorselement 42 hindurch. Zur Erfassung der relativen Lage des Permanentmagneten ist das Sensorelement 42 vorzugsweise als Hall-Sensor ausgeführt, welcher z. B. auf Winkeländerungen einer parallelen magnetischen Flussdichte reagiert. Alternativ kann auch das Sensorelement 42 als magnetoresistives Element ausgebildet sein.

Zusätzlich zu der Ausnehmung 35 ist in dem zweiten Gehäuseteil 34 eine Ventilkolbenausnehmung 51 vorgesehen, in der ein Ventilkolben 52 längs verschieblich angeordnet ist. Die Ventilkolbenausnehmung 51 ist in dem geschnitten dargestellten Bereich mit einer Durchführung 53 verbunden, welche an einer Anlagefläche 54 des zweiten Gehäuseteils 34 ausmündet. Die Durchführung 53 steht senkrecht auf der Ausnehmung 35 und ermöglicht das Nachaußenführen des Rückführhebels 36 aus dem zweiten Gehäuseteil 34 heraus. Die an der Außenseite ausgebildete Anlagefläche 54 dient der Befestigung der Regelvorrichtung 30 an dem Gehäuseteil 32 der Verstellvorrichtung der hydrostatischen Kolbenmaschine 27.

Ebenfalls mit der Durchführung 53 verbunden ist eine Bohrung 56, die sich wiederum mit einer Bohrung 57 kreuzt. Die Bohrungen 56, 57 dienen gemeinsam mit der Durchführung 53 der Rückführung von Druckmittel in Richtung eines nicht dargestellten Tankvolumens.

Um ein Austreten von Leckagemittel aus dem zweiten Gehäuseteil 34 zu verhindern, ist die Bohrung 56 mit einem Stopfen 65 verschlossen. Zur Befestigung ragen an der Anlagefläche 54 Gewindestifte 58 heraus, über die die Regelvorrichtung 30 mit dem Gehäuseteil 32 verschraubt werden kann. Zusätzlich ist ein Passstift 59 zu erkennen, über den die exakte Lage der Regelvorrichtung 30 bezüglich des Gehäuseteils 32 fixiert ist, um beispielsweise das sichere Abdichten von durch die Anlagefläche 54 geführten Stelldruckkanälen zu ermöglichen.

Die Verwendung von auf der Leiterplatte angeordneten Sensoren zur Temperatur- und Positionserfassung erlaubt ohne zusätzliche, externe Sensoren eine verbesserte Berücksichtigung von Betriebsparametern. Insbesondere kann softwareseitig eine Neutralposition variiert werden und ein temperaturabhängiges Rückschwenkverhalten realisiert werden, wobei auch eine Lüftersteuerung integriert sein kann.

Eine stark vereinfachte Darstellung einer erfindungsgemäßen Regelvorrichtung 30 in perspektivischer Ansicht ist noch einmal in Fig. 4 dargestellt. Die elektronische Steuereinheit 62 ist dabei lediglich durch eine aufgelegte Platine angedeutet. In der Fig. 4 ist die Anlagefläche 54 des zweiten Gehäuseteils 34 zu erkennen. Zu den beiden Seiten des zweiten Gehäuseteils 34 erstrecken sich die Elektromagneten 15, 16. Aus der Anlagefläche 54 ragt aus der Durchführung 53 der Rückführhebel 36 heraus, an dessen herausragendem Ende der Kopf 37 ausgebildet ist. Ebenfalls an der Anlagefläche 54 sind die Verschraubungen 58 sowie zwei Passstifte 59 ausgebildet. Zur Druckübermittlung in Richtung der Stelldruckkammern sind Öffnungen 66, 67 in der Anlagefläche 54, die gegenüber dem Gehäuseteil 32 abgedichtet befestigt wird, vorgesehen.

In den Figuren 5 bis 9 sind mehrere Alternativen zur Ausbildung des Steuerdruckregelventils 9 der Fig. 1 bzw. alternative Ausformen durch Verwendung von zwei Wegeventilen oder zwei Druckreduzierventilen dargestellt. An Stelle der gezeigten Elektromagnete 15, 16 ist es bei allen Ausführungsformen jedoch ebenso gut möglich, die erforderlichen Stellkräfte unter Verwendung von Steuerdrücken zu erzeugen. Hierzu ist es bevorzugt, zur Erzeugung jeweils der Kraft zur Betätigung des Proportionalwegeventils 90 an der Stirnseite des Proportionalwegeventils 90, ein Pilotventil vorzusehen, welches seinerseits durch die elektronische Steuereinheit 17 angesteuert wird. Im übrigen entspricht die Funktion der des in Fig. 1 dargestellten Steuerdruckregelventils 9.

In der Fig. 5 ist eine erste Alternative des Steuerdruckregelventils 9 der Fig. 1 dargestellt. Das in der Fig. 5 gezeigte Proportionalventil 90 weist zusätzlich zu den bereits unter Bezugnahme auf Fig. 1 erläuterten Endposition eine Neutralstellung auf, in der die erste Stelldruckleitung 10, die zweite Stelldruckleitung 11, die Druckzuführungsleitung 12 und die Entspannungsleitung 13 in gedrosselter Weise miteinander verbunden sind. In der Neutralstellung des Proportionalwegeventils 90 sind hierzu alle vier Anschlüsse des Proportionalwegeventils 90 gedrosselt miteinander verbunden. Die Ansteuerung erfolgt bei dem in der Fig. 5 dargestellten Ausführungsbeispiel ebenso wie bei dem Steuerdruckregelventil der Fig. 1 durch Elektromagnete 15, 16.

In der Fig. 6 ist als Alternative eine Proportionalwegeventileinheit 91 dargestellt. Die Proportionalwegeventileinheit 91 umfasst ein erstes 3/2-Wegeventil 92 und ein zweites 3/2-Wegeventil 93. Die Verwendung von zwei 3/2-Wegeventilen hat den Vorteil, dass Ventile verwendet werden können, die in größeren Stückzahlen hergestellt werden und die daher preiswert erhältlich sind. Zum parallelen Anschluss des ersten Proportionalwegeventils 92 und des zweiten Proportionalwegeventils 93 verzweigt sich die Druckzuführungsleitung 12 in einen ersten Leitungsabschnitt 12' und einen zweiten Leitungsabschnitt 12". Ebenso verzweigt sich die Entspannungsleitung 13 in einen ersten Entspannungsleitungsabschnitt 13' und einen zweiten Entspannungsleitungsabschnitt 13".

Die in der Fig. 6 dargestellte Ausgangsposition der beiden 3/2-Wegeventile 92, 93 entspricht der Neutralstellung des in der Fig. 5 dargestellten Proportionalwegeventils 90. Zur Beaufschlagung der ersten bzw. der zweiten Stelldruckleitung 10, 11 mit einem entsprechenden Stelldruck wird einer der beiden Elektromagnete 15, 16 mit einem Stellsignal beaufschlagt und das entsprechende erste oder zweite 3/2-Wegeventil 92 bzw. 93 in Richtung seiner Endposition gestellt. In der Endposition des ersten 3/2-Wegeventils 92 ist der erste Leitungsabschnitt 12' mit der ersten Stelldruckleitung 10 verbunden. Gleichzeitig bleibt die zweite Stelldruckleitung 11 mit der Entspannungsleitung 13 über den zweiten Entspannungsleitungsabschnitt 13" verbunden. Zur Beaufschlagung des Stellkolbens 5 mit einer Stellkraft in entgegengesetzter Richtung wird das Signal des ersten Elektromagneten 15 zurückgesetzt und stattdessen der zweite Elektromagnet 16 bestromt. Dadurch wird die erste Stelldruckleitung 10 mit der Entspannungsleitung 13 über den ersten Entspannungsleitungsabschnitt 13' verbunden, während gleichzeitig die zweite Stelldruckleitung 11 über den zweiten Leitungsabschnitt 12" mit der Druckzuführungsleitung 12 verbunden wird.

Alternativ zur der Proportionalwegeventileinheit 91 kann gemäß einer weiteren Ausführungsform die in der Fig. 7 dargestellte weitere Proportionalwegeventileinheit 95 verwendet werden. An Stelle der 3/2-Wegeventile 92, 93 umfasst die Proportionalwegeventileinheit 95 ein erstes 4/2-Wegeventil 96 und ein zweite 4/2-Wegeventil 97. Im Unterschied zu dem in der Fig. 6 dargestellten Ausführungsbeispiel wird hierbei eine Verbindung zwischen der ersten Stelldruckleitung 10 mit der Entspannungsleitung 13 und gleichzeitig eine Verbindung der zweiten Stelldruckleitung 11 mit der Druckzuführungsleitung 12 allein durch das erste 4/2-Wegeventil erzeugt. In der jeweiligen Ausgangsposition der 4/2-Wegeventile 96, 97 werden hierzu die entsprechenden Leitungsabschnitte 12', 12" und Entspannungsleitungsabschnitte 13', 13" miteinander verbunden. Die zur Erzeugung einer umgekehrten Stellbewegung des Stellkolbens 5 erforderliche Verbindung der ersten Stelldruckleitung 10 mit der Druckzuführungsleitung 12 bei gleichzeitiger Verbindung der zweiten Stelldruckleitung 11 mit der Entspannungsleitung 13 erfolgt dagegen über das zweite 4/2-Wegeventil 97. Bei Beaufschlagen eines der beiden 4/2-Wegeventile 96, 97 mit einer Stellkraft durch den Elektromagneten 15 bzw. den Elektromagneten 16 verbleibt das jeweils andere 4/2-Wegeventil 97, 96 in seiner jeweiligen Ausgangsposition, in der es in nicht dargestellter Weise beispielsweise durch eine Feder gehalten wird. In dieser Ausgangsstellung sind alle vier Anschlüsse des jeweiligen 4/2-Wegeventils gedrosselt miteinander verbunden.

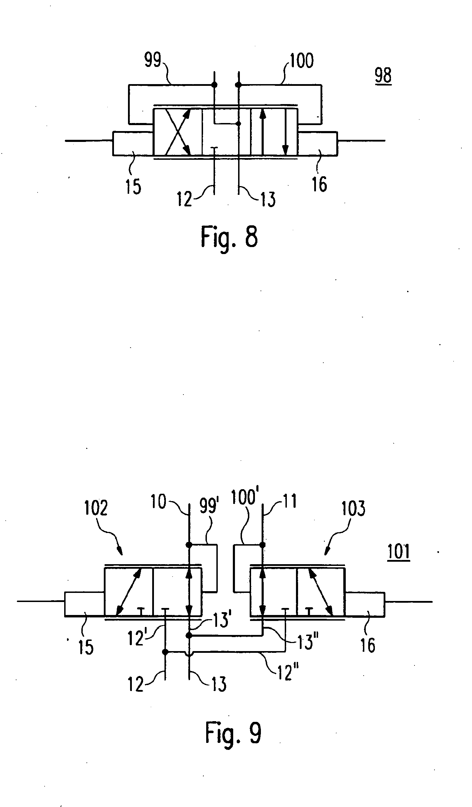

In der Fig. 8 ist ein weiteres Ausführungsbeispiel gezeigt, bei dem das Steuerdruckregelventil 9 als Druckreduzierventil 98 ausgeführt ist. Das Druckreduzierventil 98 ist ein 4/3-Wegeventil, bei dem in der Neutralposition die erste und die zweite Stelldruckleitung 10, 11 gemeinsam mit der Entspannungsleitung 13 verbunden sind. Der in der ersten Stelldruckleitung 10 herrschende Druck wird über eine erste Messleitung 99 einer Messfläche des Druckreduzierventils 98 zugeführt und wirkt dort gleichsinnig mit einer durch den ersten Elektromagneten 15 erzeugten Kraft. In entgegengesetzter Richtung wirkt auf das Druckreduzierventil 98 über eine zweite Messleitung 100 der in der zweiten Steuerdruckleitung 11 herrschende Druck gleichsinnig mit der Kraft des zweiten Elektromagneten 16. Bei einer Beaufschlagung des Druckreduzierventils 98 mit einer Kraft durch den ersten Elektromagneten 15 wird das Druckreduzierventil 98 in Richtung seiner ersten Endposition verstellt. In der ersten Endposition des Druckreduzierventils 98 wird die Druckzuführungsleitung 12 mit der zweiten Steuerdruckleitung 11 verbunden. Dadurch erhöht sich der in der zweiten Stelldruckkammer 7 herrschende Druck und somit auch der in der zweiten Stelldruckleitung 11 herrschende Druck. Eine Druckerhöhung durch Verstellung des Druckreduzierventils 98 in Richtung seiner ersten Endposition wird daher solange erfolgen, bis ein Kräftegleichgewicht zwischen dem über die zweite Messleitung 100 zugeführten Druck und dem durch den Elektromagneten 15 erzeugten Stellkraft erreicht ist.

Um eine Auslenkung des Stellkolbens 5 in entgegengesetzter Richtung zu bewirken, wird dementsprechend der zweite Elektromagnet 16 betätigt. Es kommt zu einem Kräftegleichgewicht zwischen der hydraulischen Kraft, welche entgegengesetzt zu der Kraft des Elektromagneten 16 auf das Druckreduzierventil 98 wirkt und der Stellkraft des Elektromagneten 16.

In der Fig. 9 ist eine Alternative zu dem Druckreduzierventil 98, das als 4/3-Wegeventil ausgeführt ist, eine Druckreduzierventileinheit 101 dargestellt, bei der zwei 3/2-Wegeventile 102, 103 gemeinsam die Druckreduzierventileinheit 101 bilden. Die Funktionsweise entspricht im wesentlichen der des Druckreduzierventils 98. Allerdings ist jedes 3/2-Wegeventil 102, 103 einer Stelldruckkammer 6, 7 zugeordnet. Zum Anschluss des dritten 3/2-Wegeventils 102 und des vierten 3/2-Wegeventils 103 an die Druckzuführungsleitung 12 und die Entspannungsleitung 13 teilen sich die Druckzuführungsleitungen 12 wiederum in einen ersten Leitungsabschnitt 12' und einen zweiten Leitungsabschnitt 12" sowie die Entspannungsleitung in einen ersten Entspannungsleitungsabschnitt 13' und einen zweiten Entspannungsleitungsabschnitt 13" auf. Die entsprechenden Messleitungen 99', 100' der ersten und der zweiten Stelldruckleitung 10, 11 wirken auf Messflächen und sind der Stellkraft der Elektromagneten 15 bzw. 16 entgegengerichtet. Eine Beaufschlagung des ersten Elektromagneten 15 führt zu einem Beaufschlagen der ersten Stelldruckkammer 6 mit zunehmenden Druck. Bestromen des zweiten Elektromagneten 16 resultiert in einer entgegengesetzten Stellbewegung.

## Patentansprüche

1. Regelvorrichtung für eine hydrostatische Kolbenmaschine (1, 27) mit einer elektronischen Steuereinheit (17) zum Erzeugen von Stellsignalen,
**gekennzeichnet durch**,
ein Rückführelement zum Abgreifen einer Stellposition der hydrostatischen Kolbenmaschine, wobei die elektronische Steuereinheit (17) ein Sensorelement (42) zur berührungslosen Erfassung der von dem Rückführelement abgegriffenen Stellposition aufweist, die Regelvorrichtung (30) zumindest ein erstes Gehäuseteil (33) zur Aufnahme der elektronischen Steuereinheit (17) und ein zweites Gehäuseteil (34) zur Aufnahme des Rückführelements (36, 61) aufweist und das Sensorelement (42) auf einer Leiterplatte (43) der elektronischen Steuereinheit (17) angeordnet ist.

2. Regelvorrichtung nach Anspruch 1,
**dadurch gekennzeichnet,**
**dass** das erste Gehäuseteil (33) gegenüber dem zweiten Gehäuseteil (34) abgedichtet ist.

3. Regelvorrichtung nach einem der Ansprüche 1 oder 2,
**dadurch gekennzeichnet,**
**dass** an dem Rückführelement (36, 61) ein Magnetelement angeordnet ist und auf der Leiterplatte (43) ein magnetisch sensitives Sensorelement (42) vorgesehen ist.

4. Regelvorrichtung nach einem der Ansprüche 1 bis 3,
**dadurch gekennzeichnet,**
**dass** das Rückführelement (36, 61) eine Welle (61) aufweist, die in dem zweiten Gehäuse (34) der Regelvorrichtung (30) drehbar gelagert ist.

5. Regelvorrichtung nach Anspruch 4,
**dadurch gekennzeichnet,**
**dass** die Welle (61) drehfest mit einem Rückführhebel (36) zur Umsetzung einer linearen Bewegung in eine Drehbewegung verbunden ist.

6. Regelvorrichtung nach Anspruch 4 oder 5,
**dadurch gekennzeichnet,**
**dass** das Magnetelement an der Welle (61) angeordnet ist.

7. Regelvorrichtung nach einem der Ansprüche 4 bis 6,
**dadurch gekennzeichnet,**
**dass** die abgegriffene Stellposition aufgrund des Winkels der drehbar gelagerten Welle (61) des Rückführelements von dem Sensorelement (42) erfasst wird.

8. Regelvorrichtung nach einem der Ansprüche 1 bis 7,
**dadurch gekennzeichnet,**
**dass** das Sensorelement (42) ein Hallsensor ist.

9. Regelvorrichtung nach einem der Ansprüche 1 bis 8,
**dadurch gekennzeichnet,**
**dass** das Sensorelement (42) einen magnetoresistiven Widerstand aufweist.

10. Regelvorrichtung nach einem der Ansprüche 1 bis 9,
**dadurch gekennzeichnet,**
**dass** die elektronische Steuereinheit (17) einen Temperatursensor aufweist.

11. Regelvorrichtung nach einem der Ansprüche 1 bis 10,
**dadurch gekennzeichnet,**
**dass** das erste Gehäuseteil (33) und das zweite Gehäuseteil (34) aus einem metallischen Werkstoff ausgebildet sind.

12. Regelvorrichtung nach einem der Ansprüche 1 bis 11,
**dadurch gekennzeichnet,**
**dass** die Regelvorrichtung eine integrierte Baugruppe mit einem Stelldruckregelventil (9) bildet, wobei das Stelldruckregelventil (9) in dem zweiten Gehäuse (34) angeordnet ist.

13. Regelvorrichtung nach einem der Ansprüche 4 bis 7,
**dadurch gekennzeichnet,**
**dass** die Regelvorrichtung ein Stelldruckregelventil (9) aufweist und die Ventilkolbenachse des Stelldruckregelventils (9) senkrecht auf der Wellenachse steht.

14. Regelvorrichtung nach einem der Ansprüche 1 bis 13,
**dadurch gekennzeichnet,**
**dass** in dem ersten Gehäuseteil (33) ein Aufnahmeraum (64) zur Aufnahme der elektronischen Steuereinheit (17) ausgebildet ist, der Aufnahmeraum (64) durch einen Deckel (60) verschlossen ist und ein Steckergehäuse (49) in einer Ausnehmung (63) des ersten Gehäuseteils (33) fixiert ist.

15. Hydrostatische Kolbenmaschine mit einer Verstellvorrichtung (3) zur Einstellung des Schluck- bzw. Fördervolumens der hydrostatischen Kolbenmaschine
**gekennzeichnet durch**
eine Regelvorrichtung nach einem der Ansprüche 1 bis 14, wobei das Rückführelement (36, 61) die Stellposition der Verstellvorrichtung (3) abgreift.

16. Hydrostatische Kolbenmaschine nach Anspruch 15,
**dadurch gekennzeichnet,**
**dass** die Regelvorrichtung an einem Gehäuseteil (32) der hydrostatischen Kolbenmaschine (27) befestigt ist.

17. Hydrostatische Kolbenmaschine nach Anspruch 15 oder 16,
**dadurch gekennzeichnet,**
**dass** die Regelvorrichtung nach einem der Ansprüche 5 bis 7 ausgebildet ist und der Rückführhebel (36) an dem von der Welle (61) abgewandten Ende in einen Stellkolben (5) der Verstellvorrichtung (3) eingreift.

## Claims

1. Regulating device for a hydrostatic piston engine (1, 27) with an electronic control unit (17) for generating adjusting signals,
**characterised by**
a feedback element for scanning an adjusting position of the hydrostatic piston engine, wherein the electronic control unit (17) has a sensor element (42) for the contact-less detection of the adjusting position scanned by the feedback element, the regulating device (30) has at least one first housing part (33) for accommodating the electronic control unit (17) and a second housing part (34) for accommodating the feedback element (36, 61), and the sensor element (42) is arranged on a printed circuit board (43) of the electronic control unit (17).

2. Regulating device according to claim 1,
**characterised in that**]
the first housing part (33) is sealed off from the second housing part (34).

3. Regulating device according to either of claims 1 or 2,
**characterised in that**
a magnetic element is arranged on the feedback element (36, 61) and a magnetically sensitive sensor element (42) is provided on the printed circuit board (43).

4. Regulating device according to one of claims 1 to 3,
**characterised in that**
the feedback element (36, 61) has a shaft (61) which is mounted rotatably in the second housing (34) of the regulating device (30).

5. Regulating device according to claim 4,
**characterised in that**
the shaft (61) is connected non-rotatably to a feedback lever (36) for converting a linear movement into a rotational movement.

6. Regulating device according to claim 4 or 5,
**characterised in that**
the magnetic element is arranged on the shaft (61).

7. Regulating device according to one of claims 4 to 6,
**characterised in that**
the scanned adjusting position is detected by the sensor element (42) on the basis of the angle of the rotatably mounted shaft (61) of the feedback element.

8. Regulating device according to one of claims 1 to 7,
**characterised in that**
the sensor element (42) is a Hall sensor.

9. Regulating device according to one of claims 1 to 8,
**characterised in that**
the sensor element (42) has a magneto-resistive resistor.

10. Regulating device according to one of claims 1 to 9,
**characterised in that**
the electronic control unit (17) has a temperature sensor.

11. Regulating device according to one of claims 1 to 10,
**characterised in that**
the first housing part (33) and the second housing part (34) are constructed from a metal material.

12. Regulating device according to one of claims 1 to 11,
**characterised in that**
the regulating device forms an integrated assembly with a control pressure regulating valve (9), wherein said control pressure regulating valve (9) is arranged in the second housing (34).

13. Regulating device according to one of claims 4 to 7,
**characterised in that**
the regulating device has a control pressure regulating valve (9) and the axis of the valve piston of said control pressure regulating valve (9) stands perpendicularly on the axis of the shaft.

14. Regulating device according to one of claims 1 to 13,
**characterised in that**
an accommodating space (64) for accommodating the electronic control unit (17) is constructed in the first housing part (33), said accommodating space (64) is closed by a cover (60), and a plug housing (49) is fixed in a recess (63) in said first housing part (33).

15. Hydrostatic piston engine with an adjusting device (3) for setting the absorption or discharge volume of the hydrostatic piston engine,
**characterised by**
a regulating device according to one of claims 1 to 14, wherein the feedback element (36, 61) scans the adjusting position of the adjusting device (3).

16. Hydrostatic piston engine according to claim 15,
**characterised in that**
the regulating device is fastened to a housing part (32) of said hydrostatic piston engine (27).

17. Hydrostatic piston engine according to claim 15 or 16,
**characterised in that**
the regulating device is constructed in accordance with one of claims 5 to 7 and the feedback lever (36) engages, at that end which faces away from the shaft (61), in an adjusting piston (5) of the adjusting device (3).

## Revendications

1. Dispositif de régulation pour une machine à piston hydrostatique (1, 27) avec une unité de commande électronique (17) pour la production de signaux de réglage, **caractérisé par** un élément de réaction pour la saisie d'une position de réglage de la machine à piston hydrostatique, où l'unité de commande électronique (17) présente un élément de détection (42) pour la détection sans contact de la position de réglage saisie par l'élément de réaction, le dispositif de régulation (30) présente au moins une première partie de boîtier (33) pour la réception de l'unité de commande électronique (17) et une deuxième partie de boîtier (34) pour la réception de l'élément de réaction (36, 61), et que l'élément de détection (42) est disposé sur une carte de circuit imprimé (43) de l'unité de commande électronique (17).

2. Dispositif de régulation selon la revendication 1, **caractérisé en ce que** la première partie de boîtier (33) est rendue étanche par rapport à la seconde partie de boîtier (34).

3. Dispositif de régulation selon l'une des revendications 1 ou 2, **caractérisé en ce qu'**est disposé à l'élément de réaction (36, 61) un élément d'aimant et qu'il est prévu sur la carte de circuit imprimé (43) un élément de détection (42) réagissant magnétiquement.

4. Dispositif de régulation selon l'une des revendications 1 à 3, **caractérisé en ce que** l'élément de réaction (36, 61) présente un arbre (61) qui est logé d'une manière tournante dans le second boîtier (34) du dispositif de régulation (30).

5. Dispositif de régulation selon la revendication 4, **caractérisé en ce que** l'arbre (61) est relié d'une manière non tournante à un levier de réaction (36) pour transformer un mouvement linéaire en un mouvement de rotation.

6. Dispositif de régulation selon la revendication 4 ou 5, **caractérisé en ce que** l'élément d'aimant est disposé à l'arbre (61).

7. Dispositif de régulation selon l'une des revendications 4 à 6, **caractérisé en ce que** la position de réglage saisie est détectée sur la base de l'angle de l'arbre (61) logé d'une manière rotative de l'élément de réaction par l'élément de détection (42).

8. Dispositif de régulation selon l'une des revendications 1 à 7, **caractérisé en ce que** l'élément de détection (42) est un capteur de Hall.

9. Dispositif de régulation selon l'une des revendications 1 à 8, **caractérisé en ce que** l'élément de détection (42) présente une résistance magnéto-résistive.

10. Dispositif de régulation selon l'une des revendications 1 à 9, **caractérisé en ce que** l'unité de commande électronique (17) présente un capteur de température.

11. Dispositif de régulation selon l'une des revendications 1 à 10, **caractérisé en ce que** la première partie de boîtier (33) et la seconde partie de boîtier (34) sont réalisées en un matériau métallique.

12. Dispositif de régulation selon l'une des revendications 1 à 11, **caractérisé en ce que** le dispositif de régulation forme un groupe de construction intégré avec une vanne de régulation de pression de réglage (9), où la vanne de régulation de la pression de réglage (9) est disposée dans le second boîtier (34).

13. Dispositif de régulation selon l'une des revendications 4 à 7, **caractérisé en ce que** le dispositif de régulation présente une soupape de régulation de pression de réglage (9), et **en ce que** l'axe du piston à soupape de la soupape de régulation de pression de réglage (9) s'étend perpendiculairement à l'axe d'arbre.

14. Dispositif de régulation selon l'une des revendications 1 à 13, **caractérisé en ce qu'**il est réalisé dans la première partie de boîtier (33) un espace de réception (64) pour la réception de l'unité de commande électronique (17), **en ce que** l'espace de réception (64) est fermé par un couvercle (60) et **en ce qu'**un logement de prises (49) est fixé dans un évidement (63) de la première partie de boîtier (33).

15. Machine à piston hydrostatique avec un dispositif d'ajustement (3) pour le réglage du volume d'absorption respectivement de convoyage de la machine à piston hydrostatique, **caractérisée par** un dispositif de régulation selon l'une des revendications 1 à 14, où l'élément de réaction (36, 61) saisit la position de réglage du dispositif d'ajustement (3).

16. Machine à piston hydrostatique selon la revendication 15, **caractérisée en ce que** le dispositif de régulation est fixé à une partie de boîtier (32) de la machine à piston hydrostatique (27).

17. Machine à piston hydrostatique selon la revendication 15 ou 16, **caractérisée en ce que** le dispositif de régulation est réalisé selon l'une des revendications 5 à 7, et **en ce que** le levier de réaction (36) s'engage à l'extrémité éloignée de l'arbre (61) dans un piston de réglage (5) du dispositif d'ajustement (3).
